# FASCICULE DE BREVET EUROPEEN

(11) **EP 1 133 917 B1**
(45) Date de publication et mention de la délivrance du brevet: **14.06.2006**
(21) Numéro de dépôt: 01440068.3
(22) Date de dépôt: 14.03.2001
(51) Int. Cl.: A01M 7/00

(54) **Pulvérisateur agricole**
Landwirtschaftliche Feldspritze
An agricultural sprayer

(30) Priorité: 17.03.2000 FR 0003454
(43) Date de publication de la demande: 19.09.2001
(73) Titulaire: Kuhn-Nodet S.A., 77876 Montereau (FR)
(72) Inventeur: Guesdon, Alain, 77123 Noisy sur Ecole (FR)
(74) Mandataire: Andres, Jean-Claude

(56) Documents cités:
- FR-A- 2 759 544
- GB-A- 2 098 841

## Description

La présente invention se rapporte à un dispositif de liaison reliant une rampe d'épandage à un châssis, ou à un élément solidaire du châssis, d'un pulvérisateur agricole.

Un tel dispositif de liaison est connu de l'homme du métier. En effet, la demande de brevet **FR 2 759 544** décrit un pulvérisateur agricole comportant, entre autres, un châssis muni de roues, et une pluralité de buses de pulvérisation disposées à intervalle sensiblement régulier le long d'une rampe. Lors du travail, ladite rampe est déployée transversalement à une direction d'avance dudit pulvérisateur, et lesdites buses pulvérisent un produit sur des plantes à traiter. Dans ce document antérieur, ladite rampe est liée audit châssis au moyen de deux parallélogrammes identiques qui s'étendent suivant des plans respectifs sensiblement verticaux. Lesdits parallélogrammes peuvent être déformés au moyen d'un vérin hydraulique respectif. Cette déformation des parallélogrammes permet de déplacer ladite rampe par rapport audit châssis, principalement suivant une direction verticale, afin d'adapter la hauteur de pulvérisation desdites buses à la taille plus ou moins grande des plantes à traiter. Dans ce document, lesdits parallélogrammes sont disposés symétriquement de part et d'autre d'un plan vertical médian dudit pulvérisateur, et les circuits d'alimentation desdits vérins sont branchés en parallèle.

Avec un tel dispositif de liaison, divers facteurs font que dans la pratique, lesdits parallélogrammes ne se déforment pas à la même vitesse. Par conséquent, ladite rampe, lors de son déplacement par rapport audit châssis, va s'incliner par rapport à un plan horizontal en pivotant autour d'un axe longitudinal dudit pulvérisateur. De ce fait, la hauteur de pulvérisation desdites buses n'est plus uniforme, ce qui nuit à une bonne répartition dudit produit sur les plantes traitées. De plus, lorsque la rampe s'écarte dudit plan horizontal, la répartition du poids de ladite rampe entre les deux parallélogrammes n'est plus symétrique, cette répartition se faisant au détriment du parallélogramme le plus bas. Cette différence de charge entre les parallélogrammes accentue encore davantage l'écart entre lesdites vitesses de déformation, d'où une amplification du phénomène. Il en résulte des sollicitations très importantes au niveau des différents axes et des différents bras constituant le dispositif de liaison et, pour les pulvérisateurs à grande largeur d'épandage, ladite rampe risque même de venir heurter le sol.

L'expérience montre également qu'un dispositif à deux parallélogrammes, tel que celui décrit dans ce document antérieur, ne procure pas une rigidité satisfaisante face à une sollicitation orthogonale audit plan vertical médian. En effet, lors du travail en dévers par exemple, ou plus généralement lorsque ledit pulvérisateur roule sur un sol chaotique, il est fréquent de constater un battement indésirable de ladite rampe par rapport audit châssis suivant une direction transversale à ladite direction d'avance. Ce battement engendre, à son tour, des sollicitations importantes et répétées sur lesdits axes constituant le dispositif de liaison, et il perturbe également la bonne répartition dudit produit sur les plantes traitées.

Les deux constatations décrites ci-dessus ont amené l'homme du métier à renforcer ce dispositif de liaison connu, par exemple en solidarisant les deux parallélogrammes au moyen de traverses.

Mais cette rigidification rend les opérations de montage dudit dispositif de liaison plus ardues. De plus, elle engendre un accroissement de la masse de l'ensemble ainsi qu'une augmentation du coût de fabrication déjà grevée par l'emploi de deux vérins hydrauliques.

Un pulvérisateur selon le préambule de la revendication 1 est également connu par le document **GB 20 98 841**.

Le but de la présente invention vise donc à remédier aux différents inconvénients de l'état de la technique en réalisant un dispositif de liaison de fabrication moins onéreux et de montage plus aisé, tout en présentant un bon comportement mécanique.

L'objet assigné à la présente invention est atteint à l'aide d'un dispositif de liaison caractérisé par le fait que l'un desdits bras est un bras porteur destiné à supporter la majeure partie des sollicitations imposées par ladite rampe d'épandage et que l'autre bras est un bras orienteur qui a pour unique rôle de maintenir une orientation angulaire de ladite rampe d'épandage, et que ledit bras porteur a, en vue de dessus, une structure en forme de "T" dont la tête est située du coté de ladite rampe d'épandage.

En effet, l'emploi d'un tel dispositif permet de réduire considérablement, par rapport à l'état de la technique, le nombre de pièces nécessaires à la réalisation de la liaison entre une rampe d'épandage et un châssis de pulvérisateur agricole ou un élément solidaire dudit châssis, d'où un montage de l'ensemble plus facile et une construction moins onéreuse.

Une autre caractéristique de l'invention consiste à n'utiliser qu'un seul vérin pour déformer ce dispositif, d'où une baisse encore plus importante du coût de fabrication.

Une autre caractéristique de l'invention réside dans le fait que ce quadrilatère se compose d'un bras porteur et d'un bras orienteur. Ledit bras porteur est destiné à supporter la majeure partie des sollicitations imposées par la rampe d'épandage, alors que le bras orienteur a pour unique rôle de maintenir sensiblement verticale l'orientation d'un plan d'extension de ladite rampe. De ce fait, la répartition des charges entre le bras porteur et le bras orienteur est imposée. On peut donc aisément optimiser la forme de ces derniers pour garantir un bon comportement dynamique de la rampe.

D'autres caractéristiques de l'invention apparaîtront encore dans les autres sous-revendications et dans la description suivante d'un exemple de réalisation non limitatif de l'invention représenté sur les dessins annexés sur lesquels :
- la **figure 1** représente, en vue de coté, un pulvérisateur agricole conforme à l'invention,
- la **figure 2** représente, également en vue de coté mais à une autre échelle et avec des coupes partielles, l'arrière du pulvérisateur agricole de la figure 1
où un dispositif de liaison conforme à l'invention est monté,
- la **figure 3** représente, vus suivant la flèche I, l'arrière du pulvérisateur ainsi que le dispositif de liaison représentés sur la figure 2,
- la **figure 4** représente, en vue de coté, un exemple de réalisation d'un bras porteur conforme à l'invention,
- la **figure 5** représente, vu suivant la flèche II, le bras porteur de la figure 4,
- la **figure 6** représente, en vue de coté, un exemple de réalisation d'un bras orienteur conforme à l'invention,
- la **figure 7** représente, vu suivant la flèche III, le bras orienteur de la figure 6.

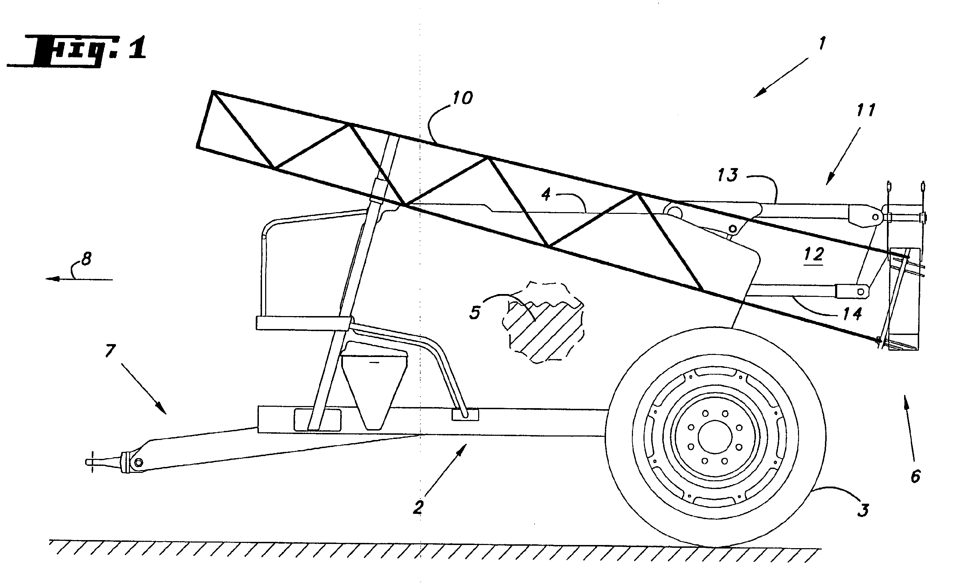

La figure 1 représente un pulvérisateur agricole (1), conforme à l'invention, en position de transport. Ledit pulvérisateur (1) comporte un châssis (2) qui roule sur le sol au moyen de deux roues (3). Ledit châssis (2) supporte d'une part une cuve (4) contenant un produit (5), et d'autre part une pluralité de buses de pulvérisation (non représentées) disposées à intervalle sensiblement régulier le long d'une rampe d'épandage (6). Ledit châssis (2) est lié, de manière connue, à un véhicule moteur (non représenté) au moyen d'un timon (7). Ledit véhicule moteur tracte ledit pulvérisateur (1) suivant une direction d'avance (8). Dans cet exemple de réalisation, ledit pulvérisateur (1) est donc de type traîné. Il va de soi que la présente invention concerne également des pulvérisateurs de type porté ainsi que des pulvérisateurs automoteurs.

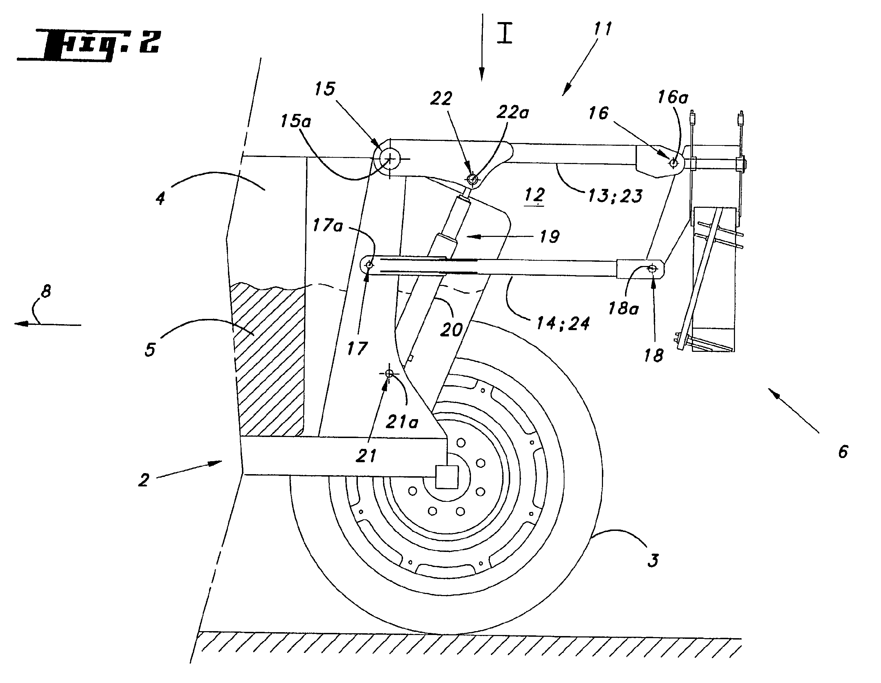

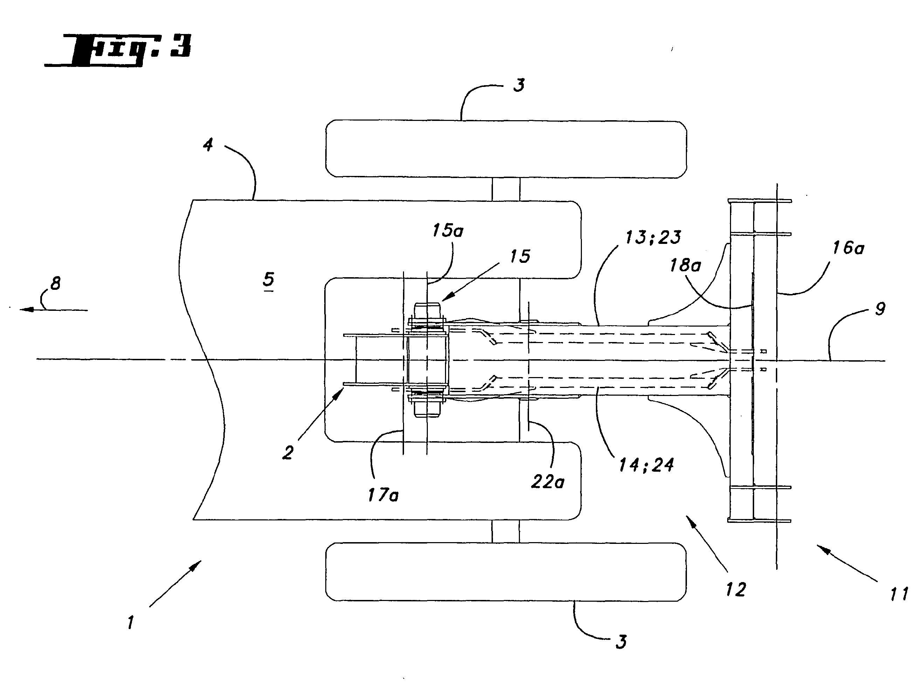

Ladite rampe d'épandage (6) est liée audit châssis (2) au moyen d'un dispositif de liaison (11). Lors du travail, ladite rampe d'épandage (6) est disposée transversalement à ladite direction d'avance (8), de part et d'autre d'un plan vertical médian (9) (figure 3) dudit pulvérisateur (1), et lesdites buses pulvérisent ledit produit (5) sur des plantes à traiter. Pour ce faire, ladite rampe d'épandage (6) comprend, de manière connue, une structure en treillis (10) dont la partie inférieure supporte lesdites buses. Ladite structure en treillis (10) est avantageusement découpée en sections. Lesdites sections sont articulées entre elles afin de pouvoir, lors du transport, replier en plusieurs fois ladite rampe d'épandage (6) le long dudit pulvérisateur (1).

Afin d'adapter la hauteur de pulvérisation desdites buses à la taille plus ou moins grande des plantes à traiter, ledit dispositif de liaison (11) permet de déplacer ladite rampe d'épandage (6) par rapport audit châssis (2) suivant une direction sensiblement verticale. A cet effet, ledit dispositif de liaison (11) est constitué d'un unique quadrilatère (12) déformable qui s'étend au moins sensiblement suivant ledit plan vertical médian (9).

Plus précisément, à la lumière de la figure 2, on peut voir que ledit quadrilatère (12) comporte un bras supérieur (13) et un bras inférieur (14). Ledit bras supérieur (13) est lié d'une part audit châssis (2) au moyen d'une articulation (15) d'axe (15a) et d'autre part à ladite rampe d'épandage (6) au moyen d'une articulation (16) d'axe (16a). Pour sa part, ledit bras inférieur (14) est lié d'une part audit châssis (2) au moyen d'une articulation (17) d'axe (17a) et d'autre part à ladite rampe d'épandage (6) au moyen d'une articulation (18) d'axe (18a). Lesdites articulations (15, 16, 17, 18) sont sensiblement situées dans ledit plan vertical médian (9), et leurs axes respectifs (15a, 16a, 17a, 18a) sont sensiblement orthogonaux à ce même plan (9). On voit également que ledit quadrilatère (12) peut être déformé au moyen d'un actionneur (19) dont la ligne d'action est avantageusement sensiblement comprise dans ledit plan vertical médian (9). Suivant l'exemple de réalisation représenté, ledit actionneur (19) est un vérin (20) lié d'une part audit châssis (2) au moyen d'une articulation (21) d'axe (21a) et d'autre part audit bras supérieur (13) au moyen d'une articulation (22) d'axe (22a). Lesdites articulations (21, 22) sont également sensiblement situées dans ledit plan vertical médian (9), et leurs axes respectifs (21a, 22a) sont également sensiblement orthogonaux à ce plan (9).

Selon une caractéristique de la présente invention, la majeure partie des contraintes imposées par ladite rampe d'épandage (6) sur ledit dispositif de liaison (11) est supportée par un seul bras appelé bras porteur (23). Le deuxième bras dudit dispositif de liaison (11) est, quant à lui, appelé bras orienteur (24), et il a pour unique rôle de maintenir une orientation angulaire de ladite rampe d'épandage (6) autour d'un axe transversal dudit pulvérisateur (1). Une telle architecture permet d'avoir une pièce maîtresse que l'on dimensionne en conséquence et une autre pièce de conception plus légère. Sur l'exemple de la figure 2, ledit vérin (20) agit sur ledit bras supérieur (13). Par conséquent, c'est ce dernier qui va jouer le rôle de bras porteur (23), et le bras inférieur (14) sera donc le bras orienteur (24). On peut également imaginer un dispositif de liaison (11) dont le bras supérieur (13) est orienteur et le bras inférieur (14) est porteur.

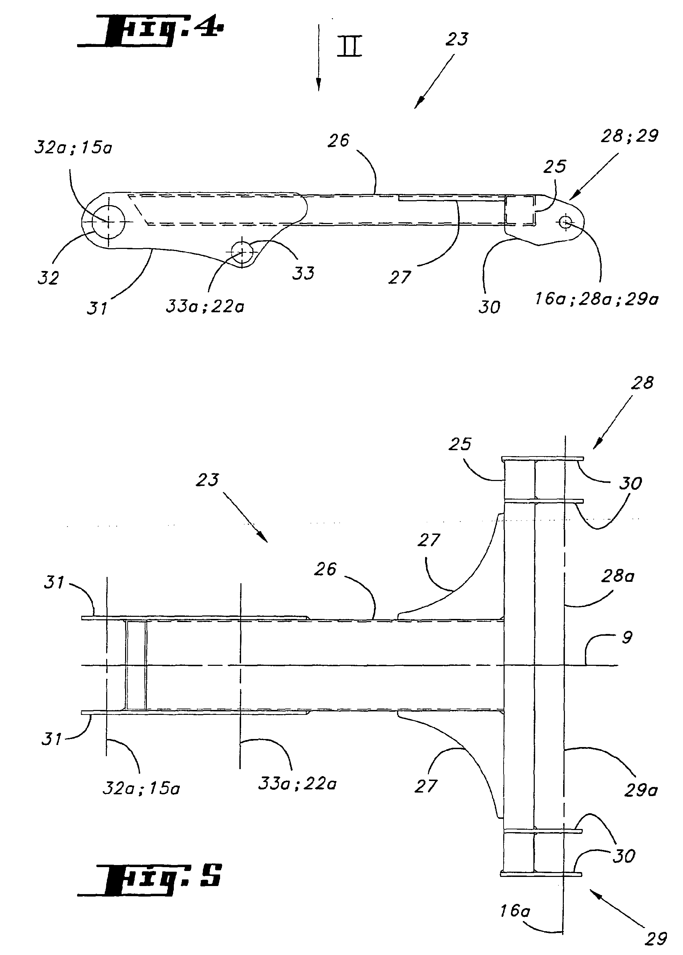

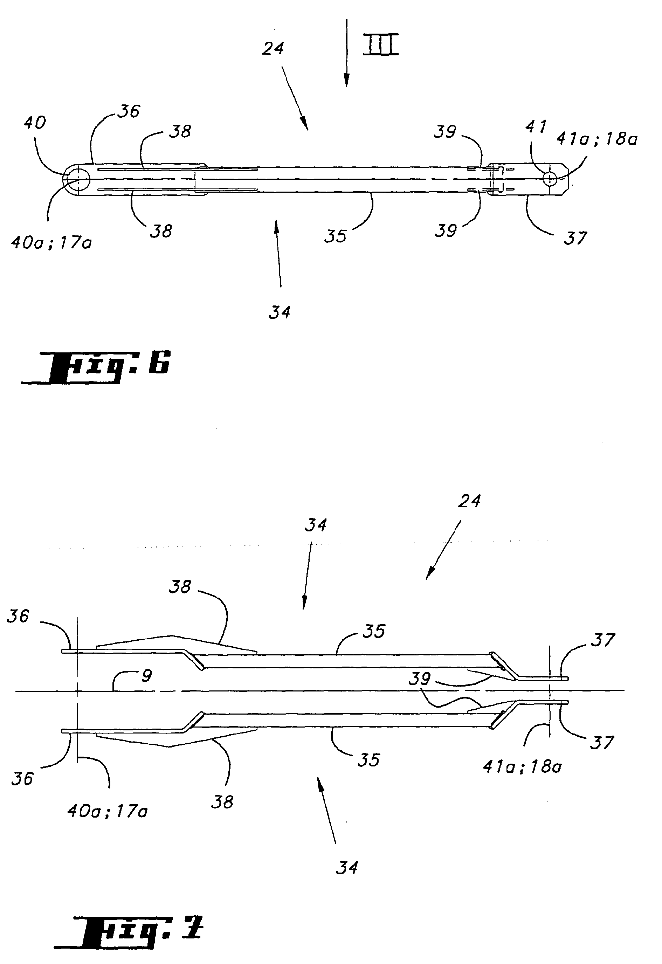

Dans l'exemple de réalisation d'un bras porteur (23) représenté sur les figures 4 et 5, ledit bras porteur (23) comporte un tube carré (25) disposé transversalement au plan vertical médian (9), et un tube rectangulaire (26) disposé dans ledit plan vertical médian (9). Ledit tube carré (25) est lié audit tube rectangulaire (26) par soudure, et cette liaison est renforcée par deux goussets (27). Dans cet exemple de réalisation, ladite articulation (16) qui lie ledit bras porteur (23) à ladite rampe d'épandage (6) est réalisée, coté bras porteur (23), au moyen de deux chapes (28, 29) dont les axes (28a, 29a) sont confondus avec ledit axe (16a). Lesdites chapes (28, 29) sont respectivement constituées de deux montants (30) liés audit tube carré (25). Ledit bras porteur (23) comporte également deux tôles (31) soudées audit tube rectangulaire (26) de part et d'autre dudit plan vertical médian (9). Lesdites tôles (31) sont respectivement percées de deux trous (32, 33) d'axe (32a, 33a) respectif. Lesdits trous (32) servent à réaliser, coté bras porteur (23), l'articulation (15), et leurs axes respectifs (32a) sont confondus avec l'axe (15a). Lesdits trous (33) servent, quant à eux, à réaliser l'articulation (22), et leurs axes respectifs (33a) sont donc confondus avec l'axe (22a). Une telle architecture en caisson permet avantageusement audit bras porteur (23) d'acquérir une bonne rigidité vis-à-vis des sollicitations en flexion et en torsion imposées par ladite rampe d'épandage (6). Dans cet exemple de réalisation, ledit bras porteur (23) a, en vue de dessus, une forme en "T" dont la tête est située du coté de la rampe (6). Une telle disposition permet, quant à elle, d'obtenir également une bonne rigidité dans la liaison entre ladite rampe (6) et ledit bras porteur (23). Suivant un autre exemple de réalisation, ledit bras porteur (23) se compose dudit tube rectangulaire (26), desdites tôles (31), et ladite articulation (16) est réalisée par une unique chape disposée dans le prolongement dudit tube rectangulaire (26). Selon un autre exemple encore, ledit bras porteur (23) a une forme en "T" dont la tête est située, cette fois-ci, du coté du châssis (2). On peut également imaginer une combinaison des deux formes en "T" décrites ci-dessus. On obtient ainsi un bras porteur (23) en "I" avec la tête du coté de la rampe (6) et le pied du coté du châssis (2).

Dans l'exemple de réalisation d'un bras orienteur (24), représenté sur les figures 6 et 7, ledit bras orienteur (24) se compose de deux longerons (34) disposés symétriquement de part et d'autre du plan vertical médian (9). Chaque longeron (34) est constitué d'un tube rectangulaire (35) dont les extrémités sont respectivement liées à une tôle avant (36) et à une tôle arrière (37). Les liaisons entre ledit tube rectangulaire (35) et lesdites tôles (36, 37) sont renforcées par des goussets respectifs (38, 39). Lesdites tôles avant (36) sont respectivement percées d'un trou (40) d'axe (40a), et lesdites tôles arrières (37) sont respectivement percées d'un trou (41) d'axe (41a). Lesdits trous (40) servent à réaliser, côté bras orienteur (24), l'articulation (17), et leurs axes respectifs (40a) sont confondus avec l'axe (17a). Lesdits trous (41) servent, quant à eux, à réaliser l'articulation (18), et leurs axes respectifs (41a) sont confondus avec l'axe (18a). Dans cet exemple de réalisation, ledit bras orienteur (24) est traversé par ledit vérin (20). Afin de laisser un passage audit vérin (20), la distance séparant les deux tôles avant (36) est avantageusement plus importante que la distance séparant les deux tôles arrières (37). Selon un autre exemple de réalisation, lesdits longerons (34) sont rapprochés l'un de l'autre afin d'accoler les deux tôles arrières (37).

Dans le but de maintenir, quelle que soit la hauteur de pulvérisation choisie, lesdites buses suivant une direction de pulvérisation donnée (ici sensiblement verticale), ledit quadrilatère (12) décrit dans cet exemple de réalisation est sensiblement un parallélogramme. Mais la présente invention concerne également un dispositif de liaison (11) dont ledit quadrilatère (12) est un trapèze. Ceci peut s'avérer être avantageux si on souhaite imprimer à ladite rampe d'épandage (6) un mouvement de rotation autour d'un axe transversal lors du déplacement de cette dernière par rapport audit châssis (2).

De même, on peut également imaginer un pulvérisateur (1) dont le dispositif de liaison (11) ne soit pas lié directement audit châssis (2) mais par l'intermédiaire d'un support fixé, de manière démontable ou non, audit châssis (2).

Le dispositif de liaison (11) et le pulvérisateur agricole (1) qui viennent d'être décrits, ne sont qu'un exemple de réalisation et d'utilisation qui ne saurait en aucun cas limiter le domaine de protection défini par les revendications suivantes.

## Revendications

1. Dispositif de liaison reliant une rampe d'épandage (6) à un châssis (2), ou à un élément solidaire du châssis (2), d'un pulvérisateur agricole (1), ledit dispositif de liaison étant constitué d'un unique quadrilatère (12) disposé dans un plan sensiblement vertical et sensiblement parallèle à un plan longitudinal dudit pulvérisateur (1), ledit quadrilatère (12) comportant un bras supérieur (13) et un bras inférieur (14), ***caractérisé par le fait que*** l'un desdits bras (13, 14) est un bras porteur (23) destiné à supporter la majeure partie des sollicitations imposées par ladite rampe d'épandage (6) et que l'autre bras (13, 14) est un bras orienteur (24) qui a pour unique rôle de maintenir une orientation angulaire de ladite rampe d'épandage (6), et que ledit bras porteur (23) a, en vue de dessus, une structure en forme de "T" dont la tête est située du coté de ladite rampe d'épandage (6).

2. Dispositif de liaison selon la revendication 1, ***caractérisé par le fait que*** ledit quadrilatère (12) est sensiblement compris dans un plan vertical médian (9) dudit châssis (2).

3. Dispositif de liaison selon la revendication 1 ou 2, ***caractérisé par le fait que*** ledit quadrilatère (12) est déformable.

4. Dispositif de liaison selon la revendication 3, ***caractérisé par le fait que*** ledit quadrilatère (12) est déformé par un actionneur (19).

5. Dispositif de liaison selon l'une des revendications 1 à 4, ***caractérisé par le fait que*** ledit quadrilatère (12) est un trapèze.

6. Dispositif de liaison selon l'une des revendications 1 à 4, ***caractérisé par le fait que*** ledit quadrilatère (12) est un parallélogramme.

7. Dispositif de liaison selon la revendication 1, ***caractérisé par le fait que*** lesdits bras (13, 14) sont liés d'une part au châssis (2), ou à un élément solidaire dudit châssis (2), et d'autre part à ladite rampe d'épandage (6) au moyen d'articulations respectives (15, 16, 17, 18) d'axes respectifs (15a, 16a, 17a, 18a) sensiblement orthogonaux audit plan contenant ledit quadrilatère (12).

8. Dispositif de liaison selon la revendication 7, ***caractérisé par le fait que*** lesdites articulations (15, 16, 17, 18) sont situées dans ledit plan contenant ledit quadrilatère (12).

9. Dispositif de liaison selon la revendication 1, ***caractérisé par le fait que*** ledit bras porteur (23) a une structure en caisson.

10. Dispositif de liaison selon l'une quelconque des revendications 1 à 9, ***caractérisé par le fait que*** ledit actionneur (19) agit sur ledit bras porteur (23).

11. Dispositif de liaison selon l'une quelconque des revendications 1 à 10, ***caractérisé par le fait que*** ledit bras orienteur (24) est évasé pour laisser un passage audit actionneur (19).

12. Dispositif de liaison selon la revendication 4, ***caractérisé par le fait que*** ledit actionneur (19) est un vérin (20).

13. Pulvérisateur agricole comportant au moins une rampe d'épandage (6) liée à un châssis (2), ou à un élément solidaire dudit châssis (2), au moyen d'un dispositif de liaison (11) selon l'une des revendications 1 à 12.

14. Pulvérisateur agricole selon la revendication 13, ***caractérisé par** l**e fait que*** ledit pulvérisateur (1) est de type traîné.

15. Pulvérisateur agricole selon la revendication 13, ***caractérisé par le fait que*** ledit pulvérisateur (1) est de type porté.

16. Pulvérisateur agricole selon la revendication 13, ***caractérisé par le fait que*** ledit pulvérisateur (1) est de type automoteur.

## Claims

1. Connecting device connecting a spray boom (6) to a chassis (2) or to an element rigidly fastened to the chassis (2) of an agricultural sprayer (1), said connecting device consisting of a single quadrilateral (12) arranged in a plane which is substantially vertical and substantially parallel to a longitudinal plane of said sprayer (1), said quadrilateral (12) comprising an upper arm (13) and a lower arm (14), ***characterized in* that** one of the said arms (13, 14) is a carrying arm (23) intended to bear the major part of the stresses originating from the spray boom (6) and **in that** the other arm (13, 14) is an orienting arm (24) whose single part is to keep an angular orientation of the said spray boom (6), and **in that** the said carrying arm (23) has seen from above a T-shaped structure whose head is located on the same side as the spray boom (6).

2. Connecting device as claimed in claim 1, ***characterized in* that** the said quadrilateral (12) is substantially contained in a vertical mid-plane (9) of the said chassis (2).

3. Connecting device as claimed in claim 1 or 2, ***characterized in* that** the said quadrilateral (12) is deformable.

4. Connecting device as claimed in claim 3, ***characterized in* that** the said quadrilateral (12) is deformed by an actuator (19).

5. Connecting device as claimed in one of claims 1 to 4, ***characterized in* that** the said quadrilateral (12) is a trapezium.

6. Connecting device as claimed in one of claims 1 to 4, ***characterized in* that** the said quadrilateral (12) is a parallelogram.

7. Connecting device as claimed in claim 1, ***characterized in* that** the said arms (13, 14) are connected, on one hand, to the chassis (2) or to an element rigidly fastened to the chassis (2) and, on the other hand, to the said spray boom (6) by means of respective articulations (15, 16, 17, 18), the respective axes (15a, 16a, 17a, 18a) of which are substantially orthogonal to the said plane containing the said quadrilateral (12).

8. Connecting device as claimed in claim 7, ***characterized in* that** the said articulations (15, 16, 17, 18) are located in the said plane containing the said quadrilateral (12).

9. Connecting device as claimed in claim 1, ***characterized in* that** the said carrying arm (23) has a box-shaped structure.

10. Connecting device as claimed in any one of claims 1 to 9, ***characterized in* that** the said actuator (19) acts on the said carrying arm (23).

11. Connecting device as claimed in any one of claims 1 to 10, ***characterized in* that** the said orienting arm (14) is widened to leave a passage for the said actuator (19).

12. Connecting device as claimed in claim 4, ***characterized in* that** the said actuator (19) is a ram (20).

13. Agricultural sprayer comprising at least one spray boom (6) connected to a chassis (2) or to an element rigidly fastened to the chassis (2) by means of a connecting device (11) as claimed in one of claims 1 to 12.

14. Agricultural sprayer as claimed in claim 13, ***characterized in* that** the said sprayer (1) is of the trailed type.

15. Agricultural sprayer as claimed in claim 13, ***characterized in* that** the said sprayer (1) is of the mounted type.

16. Agricultural sprayer as claimed in claim 13, ***characterized in* that** the said sprayer (1) is of the self-propelled type.

## Patentansprüche

1. Verbindungsvorrichtung, die eine Verteilrampe (6) mit einem Rahmen (2) oder einem mit dem Rahmen (2) fest verbundenen Element einer landwirtschaftlichen Feldspritze (1) verbindet, wobei die Verbindungsvorrichtung von einem einzigen Trapezoid (12) gebildet ist, das in einer im Wesentlichen vertikalen und im Wesentlichen zu einer Längsebene der Feldspritze (1) parallelen Ebene angeordnet ist, wobei das Trapezoid (12) einen oberen Arm (13) und einen unteren Arm (14) umfasst, ***dadurch gekennzeichnet,* dass** einer der Arme (13, 14) ein Tragarm (23), ist, der dazu bestimmt ist, den Großteil der von der Verteilrampe (6) kommenden Belastungen aufzunehmen, und dass der andere Arm (13, 14) ein Ausrichtarm (24) ist, der nur die Aufgabe hat, eine Winkelausrichtung der Verteilrampe (6) aufrecht zu erhalten, und dass der Tragarm (23) von oben gesehen eine T-förmige Struktur aufweist, deren Kopf sich auf der Seite der Verteilrampe (6) befindet.

2. Verbindungsvorrichtung nach Anspruch 1, ***dadurch gekennzeichnet,* dass** das Trapezoid (12) im Wesentlichen in einer mittleren Vertikalebene (9) des Rahmens (2) liegt.

3. Verbindungsvorrichtung nach Anspruch 1 oder 2, ***dadurch gekennzeichnet,* dass** das Trapezoid (12) verformbar ist.

4. Verbindungsvorrichtung nach Anspruch 3, ***dadurch gekennzeichnet,* dass** das Trapezoid (12) durch ein Betätigungselement (19) verformt wird.

5. Verbindungsvorrichtung nach einem der Ansprüche 1 bis 4, ***dadurch gekennzeichnet,* dass** das Trapezoid (12) ein Trapez ist.

6. Verbindungsvorrichtung nach einem der Ansprüche 1 bis 4, ***dadurch gekennzeichnet,* dass** das Trapezoid (12) ein Parallelogramm ist.

7. Verbindungsvorrichtung nach Anspruch 1, ***dadurch gekennzeichnet,* dass** die Arme (13, 14) einerseits mit dem Rahmen (2) oder einem mit dem Rahmen (2) fest verbundenen Element und andererseits mit der Verteilrampe (6) mit Hilfe von jeweiligen Gelenken (15, 16, 17, 18) mit jeweiligen Achsen (15a, 16a, 17a, 18a), die im Wesentlichen zu der das Trapezoid (12) enthaltenden Ebene orthogonal sind, verbunden sind.

8. Verbindungsvorrichtung nach Anspruch 7, ***dadurch gekennzeichnet,* dass** die Gelenke (15, 16, 17, 18) in der das Trapezoid (12) enthaltenden Ebene angeordnet sind.

9. Verbindungsvorrichtung nach Anspruch 1, ***dadurch gekennzeichnet,* dass** der Tragarm (23) eine Kastenstruktur hat.

10. Verbindungsvorrichtung nach irgend einem der Ansprüche 1 bis 9, ***dadurch gekennzeichnet,* dass** das Betätigungselement (19) auf den Tragarm (23) einwirkt.

11. Verbindungsvorrichtung nach irgend einem der Ansprüche 1 bis 10, ***dadurch gekennzeichnet,* dass** der Ausrichtarm (24) erweitert ist, um einen Durchgang für das Betätigungselement (19) frei zu lassen.

12. Verbindungsvorrichtung nach Anspruch 4, ***dadurch gekennzeichnet,* dass** das Betätigungselement (19) ein Zylinder (20) ist.

13. Landwirtschaftliche Feldspritze, mit mindestens einer Verteilrampe (6), die mit einem Rahmen (2) oder einem mit dem Rahmen (2) fest verbundenen Element mit Hilfe einer Verbindungsvorrichtung (11) nach einem der Ansprüche 1 bis 12 verbunden ist.

14. Landwirtschaftliche Feldspritze nach Anspruch 13, ***dadurch gekennzeichnet,* dass** die Feldspritze (1) vom angehängten Typ ist.

15. Landwirtschaftliche Feldspritze nach Anspruch 13, ***dadurch gekennzeichnet,* dass** die Feldspritze (1) vom Anbau-Typ ist.

16. Landwirtschaftliche Feldspritze nach Anspruch 13, ***dadurch gekennzeichnet,* dass** die Feldspritze (1) vom selbstfahrenden Typ ist.
